# EUROPEAN PATENT APPLICATION

(11) **EP 2 259 570 A1**
(43) Date of publication of application: **08.12.2010**
(21) Application number: 10164863.2
(22) Date of filing: 03.06.2010
(51) Int. Cl.: H04N 5/00, H04N 7/167, H04N 7/173, H04N 5/91

(54) **Network transmission system and network transmission device thereof**

(30) Priority: 04.06.2009 TW 098118493
(71) Applicant: DynaLab (Singapore) Ltd, Singapore 079903 (SG)
(72) Inventor: Lee, Chen Yin, 116, Taipei (TW)
(74) Representative: Baldwin, Mark

(57) **Abstract**

A network transmission system (10) has a network transmission device (53) connected to an operating centre (51) and a user device (56). The network transmission device comprises at least one storage unit (54) and the operating centre transmits data to the network transmission device and stores the data in the storage unit. The operating centre can control the network transmission device to transmit the data stored in the storage unit to the user device

## Description

### 1. Field of the Invention:

The present invention generally relates to a device imbedded in a digital subscriber line equipment to provide virtualization software functions and, more particularly, to a set-top-box capable of providing video-on-demand programs on an interactive TV set.

### 2. Background of the Invention:

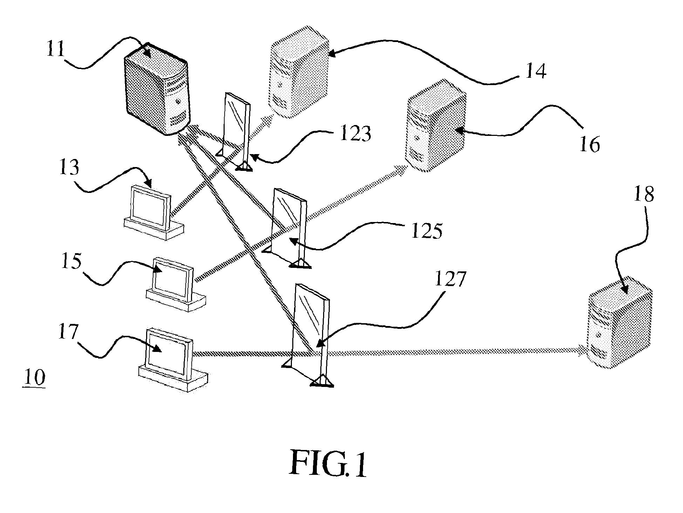

Conventionally, in virtual computer hardware technology, it is possible for a second user to have access to the expensive computer hardware during the break of hardware operation for a first user because the first user does not use up the hardware. With the rapid development in computer hardware, it is possible for a third user and even a fourth user to have access to the computer hardware during the break of hardware operation for the second user, while the first user does not use up the hardware. FIG. 1 is a schematic diagram of a virtual host system, wherein a plurality of users may have access to the computer hardware.

In FIG. 1, the virtual host system 10 makes it possible to make the most of hardware appliances. For example, a host 11 can be used as independent virtual host systems 14, 16, 18 when the host 11 is used by users 13, 15, 17 through the processes 123, 125 and 127, respectively, at the same time. More particularly, by the process 123, the user 13 has access to the host 11 as an independent virtual host system 14. Similarly, the user 15 has access to the host 11 as an independent virtual host system 16 by the process 125, and the user 17 has access to the host 11 as an independent virtual host system 18 by the process 127.

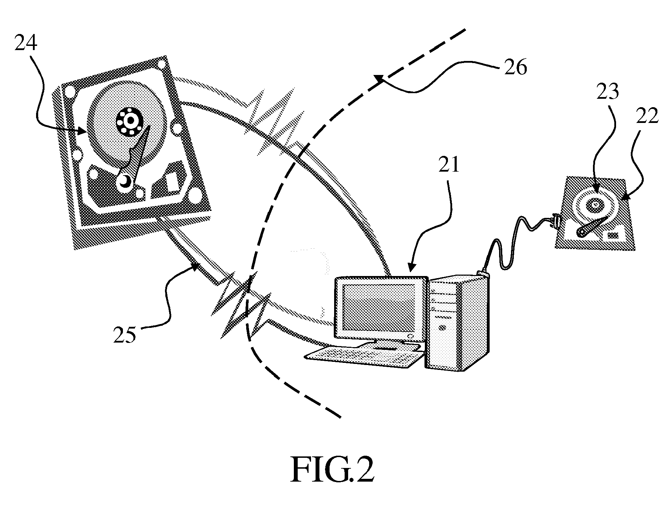

As the cost of software grows higher, the cost should be shared by more users. FIG. 2 is a schematic diagram of software virtualization. Software virtualization is different from hardware virtualization. Hardware virtualization achieves lowered cost by sharing the hardware with other users whenever there is a break of hardware operation, while software virtualization achieves lowered cost and more valuable service by reducing the opportunity cost of using software.

In FIG. 2, the cost of software is high because there are not enough users to share the cost. As a result, a gap 26 between the supplier and the user appears. More particularly, on the user's side, the user's software storage unit 22 (for example, a hard disk drive) coupled to a personal hardware device 21 (for example, a personal computer or a television set) stores software applications 23 and data. As the capacity of the software storage unit 22 enlarges, more software applications can be stored. However, most of the software applications 23 are free. The user only pays for software applications 23 when he/she has to. Moreover, the software applications 23 stored in the software storage unit 22 only occupies a small amount of hardware capacity. The user pays one-off defrayal for software mostly in theatres and video rental shops.

However, on the supplier's side, in the software storage unit 24, as the size and cost of software grows, a gap 26 between the supplier and the user results from the supplier's attempt to protect the intellectual property rights (IPR). The digital subscriber line (DSL) 25 includes x-digital subscriber line (xDSL) and ethernet passive optical network (EPON). Even though the newly developed transmission device exhibits higher speed, the gap 26 will not disappear if the user does not feel the convenience.

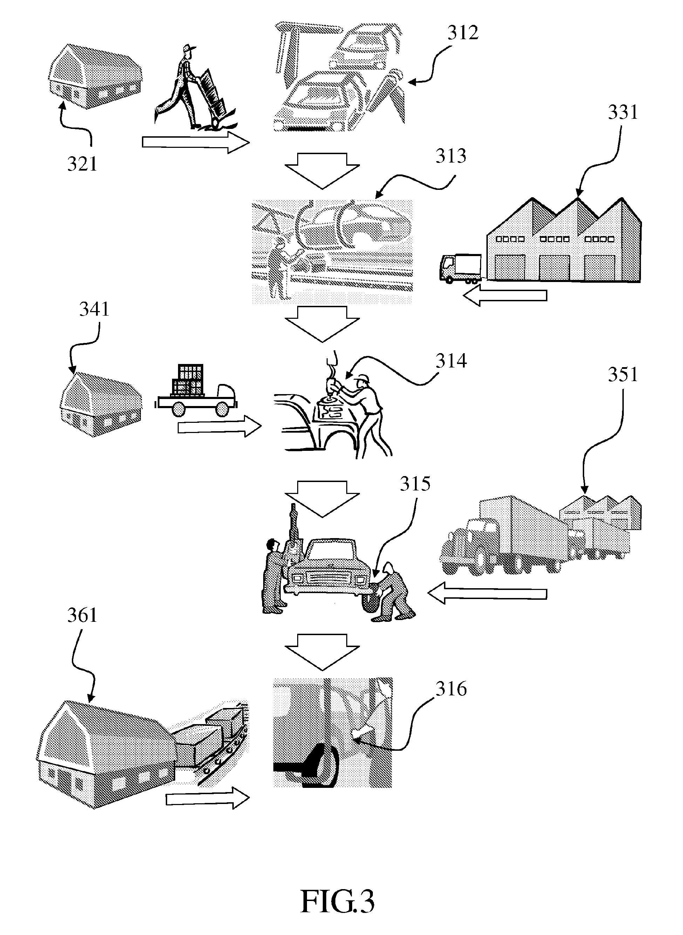

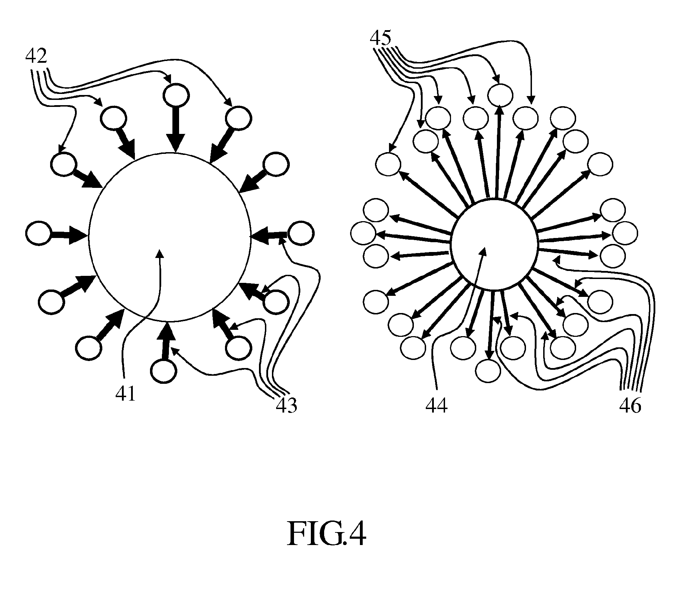

For example, FIG. 3 shows the relation between an automobile assembly plant and its supply chain. When an automobile assembly plant adopts zero-stock management, the automobile assembly plant has no components in stock. Meanwhile, the components are provided by component suppliers 321, 331, 341, 351, 361. FIG. 4 shows the warehouses of the component suppliers 321, 331, 341, 351, 361 may be built around operating sites 312, 313, 314, 315, 316 of the zero-stock assembly line so that the component suppliers 321, 331, 341, 351, 361 have to be in charge of inventory and risk management.

More particularly, FIG. 4 shows schematic diagrams for an inventory supplied to an operating centre and a software supplier supplied to users. Taking the automobile assembly plant as an operating centre 41 for example, the automobile assembly plant 41 adopts zero-stock management and is supplied with components from the warehouses 42 through channels 43 that determine the conveniency and effieciency of the supply chain. On the other hand, the software supplier as an operating centre 44 supplies the user with software applications to be stored in a storage medium 45 through channels 46 that determine the conveniency and effieciency of the supply chain.

### SUMMARY OF THE INVENTION

It is one object of the present invention to provide to a device imbedded in a digital subscriber line equipment to provide virtualization software functions.

It is another object of the present invention to provide a set-top-box capable of providing video-on-demand programs on an interactive TV set.

To achieve the foregoing objects, the present invention provides a network transmission device connected to an operating centre and a user device, wherein the network transmission device comprises at least one storage unit and the operating centre transmits data to the network transmission device that stores the data in the storage unit.

To achieve the foregoing objects, the present invention further provides a network transmission system, comprising: an operating centre; a network transmission device comprising a storage unit and being connected the operating centre, wherein the operating centre transmits data to the network transmission device that stores the data in the storage unit; and a user device connected to the network transmission device to receive the data from the network transmission device.

### BRIEF DESCRIPTION OF THE DRAWINGS

The objects and spirit of the embodiments of the present invention will be readily understood by the accompanying drawings and detailed description, wherein:
FIG. 1 is a schematic diagram of a virtual host system;
FIG. 2 is a schematic diagram of software virtualization;
FIG. 3 shows the relation between an automobile assembly plant and its supply chain;
FIG. 4 shows schematic diagrams for an inventory supplied to an operating centre and a software supplier supplied to users;
FIG. 5 is a schematic diagram of a network transmission device in a network transmission system according to one embodiment of the present invention; and
FIG. 6 is a schematic diagram of a network transmission device in a network transmission system according to another embodiment of the present invention.

### DETAILED DESCRIPTION OF THE PREFERRED EMBODIMENTS

The present invention is exemplified but not limited by various embodiments as described hereinafter.

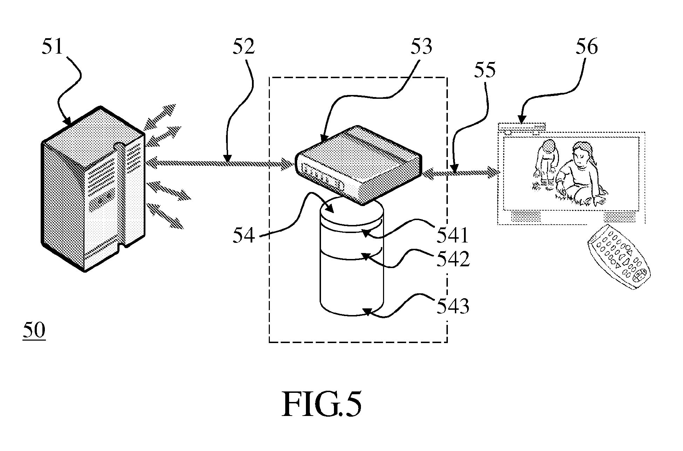

Please refer to FIG. 5, which is a schematic diagram of a network transmission device in a network transmission system according to one embodiment of the present invention. In FIG. 5, the network transmission system 50 comprises an operating centre 51, at least one network transmission device 53 and at least one user device 56. The network transmission device 53 comprises a storage unit 54.

In one embodiment of the invention, the network transmission device 53 is connected to an operating centre 51 and a user device 56 by way of the subscriber lines 52 and 55, respectively.

The operating centre 51 transmits data to the network transmission device 53 and stores the data in the storage unit 54 of the network transmission device 53, when the user device 56 is turned on or off. Moreover, the operating centre 51 is capable of controlling the network transmission device 53 and transmitting the data stored in the storage unit 54 to the user device 56.

Practically, the user can use the user device 56 to issue a request messge to the operating centre 51 by way of the network transmission device 53, and then the operating centre 51 controls the network transmission device 53 to transmit the data stored in the storage unit 54 to the user device 56.

The storage unit 54 of the network transmission device 53 comprises, but is not limited to, a hard disk drive and a storage IC with operation software thereof. The operating centre 51, instead of the user device 56, controls the operation of the storage unit 54.

The storage unit 54 installed in the network transmission device 53 can store a large amount of valuable software content. In one embodiment of the present invention, the network transmission device 53 can be a set-top-box, a router, a modem, xDSL(x Digital Subscriber Line), ADSL, VDSL(Very High Data Rate DSL), EPON or cable modem. For example, the network transmission device 53 can be a set-top-box, while the user device 56 is a television set. The set-top-box can be installed on top of the TV set of a user who still has no access to the software contents. The network transmission device 53 and the user device 56 can be owned by the same user.

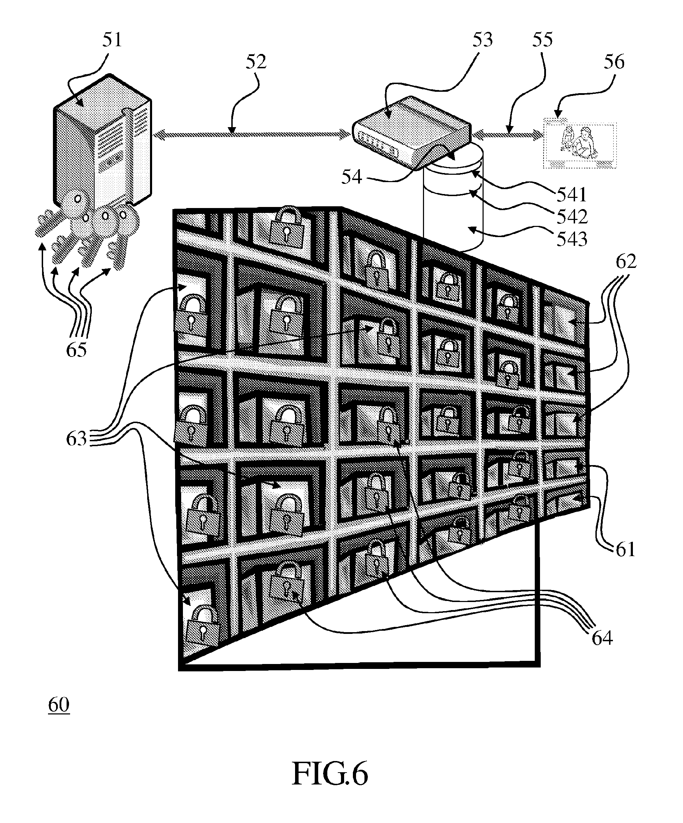

The owner of the network transmission device 53 and user device 56 are not allowed to access the data or software contents stored in the storage unit 54 without permission. Moreover, the network transmission system 50 or the network transmission device 53 can be provided with mechanism that prevents the data or software contents that is stored in the storage unit 54 to be accessed, for example, encryption keys 64 and decryption keys 65 in FIG. 6.

The storage unit 54 installed in the network transmission device 53 can be a buffer for data transmission from the operating centre 51 to the user device 56. The storage unit 54 can be a buffer with small capacity or large capacity to store a large amount of data from the operating centre 51 when the user device 56 is turned on or off. The data stored in the storage unit 54 may comprise, but is not limited to, 100 movies or the transaction logs of global stock markets within 24 hours.

The data stored in the storage unit 54 cannot be legally accessed by the user device 56, and the index of the data stored in the storage unit 54 is also built in the operating centre 51. Moreover, the operating centre 51 provides an encryption key 64 and a decryption key 65 corresponding to each data management unit, as shown in FIG. 6. The operating centre 51 can decrypt the encryption key 64 of data management unit by the decryption key 65 that is corresponding to the encryption key 64. Accordingly, even if a file stored in the storage unit 54 of the network transmission device 53 is illegally accessed, a static protection operation prevents a second file from being illegally accessed.

When the data stored in the storage unit 54 of the network transmission device 53 is transmitted to the user device 56, a transmission log thereof is transmitted to the operating centre 51, which is a dynamic monitoring operation.

The storage unit 54 comprises an on-line buffered storage medium 541, an unencrypted off-line storage medium 542 and an encrypted off-line storage medium 543. The on-line buffered storage medium can be a buffered storage site of a next data after the data stored in the on-line buffered storage medium arrives at the user device 56. The operating centre 51 stores the encrypted data in the encrypted off-line storage medium 543 or encrypts the data stored in the encrypted off-line storage medium 543. In one embodiment of the present invention, the operating centre 51 encrypts the data and transmits the encrypted data to the network transmission device 53. The operating centre 51 further stores the data in the storage unit 54 of the network transmission device 53, decrypts the data stored in the storage unit 54 and transmits the decrypted data to the user device 56.

Moreover, the operating centre 51 stores the unencrypted data in the unencrypted off-line storage medium 542. Part of the data stored in the unencrypted off-line storage medium 542 and part or all of the data stored in the encrypted off-line storage medium 543 are then stored and processed to spare some capacity of the storage unit 54 after receiving an instruction from the operating centre 51. The processed result and data are then transmitted back to the operating centre 51. The user device 56 can controll the data stored in the unencrypted off-line storage medium 542.

In one embodiment of the present invention, the user device 56 can display or use the data in the on-line buffered storage medium 541, and the data is transmitted from the operating centre 51. Otherwise, the data can be played by way of the buffered storage medium 541 when the data is completely processed. The the user device 56 can display or use the data in the encrypted off-line storage medium 543, and the data is transmitted from the operating centre 51. The user device 56 also can display or use the data in the encrypted off-line storage medium 543, and the data stored in the encrypted off-line storage medium 543 are unencrypted contents transmitted from the operating centre 51 or decrypted data from the encrypted off-line storage medium 543 that can be legally stored.

Please refer to FIG. 6, which is a schematic diagram of a network transmission device in a network transmission system according to another embodiment of the present invention. In FIG. 6, the network transmission system 60 comprises an operating centre 51, at least one network transmission device 53 and at least one user device 56. The network transmission device 53 further comprises a storage unit 54.

The network transmission device 53 is connected to an operating centre 51 and a user device 56. The operating centre 51 transmits data to the network transmission device 53 and stores the data in the storage unit 54. Moreover, the operating centre 51 is capable of controlling the network transmission device 53 and transmitting the data stored in the storage unit 54 to the user device 56.

In one embodiment of the present invention, the on-line buffered storage medium 541 can be devided into a plurality of storage units 61. The unencrypted off-line storage medium 542 can be devided into a plurality of storage units 62. The encrypted off-line storage medium 543 can be devided into a plurality of storage units 63. Each of the storage units 63 of the encrypted off-line storage medium 543 is encrypted by an encryption key 64. The operating centre 51 stores a corresponding decryption key 65 so that the operating centre 51 can decrypt the storage unit 63 of the encrypted off-line storage medium 543 using the decryption key 65 corresponding to the encryption key 64 of the storage unit 63. For example, the encryption keys 64 to the data storage units 63 of the encrypted off-line storage medium 543 are not identical. Accordingly, the data can be stored in the storage unit 63 of the encrypted off-line storage medium 543 and the data stored in the storage unit 63 of the encrypted off-line storage medium 543 can be accessed.

The foregoing operations can be implemented in the digital subscriber line (DSL) devices for software subscribers so as to provide virtualization software functions.

Although this invention has been disclosed and illustrated with reference to particular embodiments, the principles involved are susceptible for use in numerous other embodiments that will be apparent to persons skilled in the art. This invention is, therefore, to be limited only as indicated by the scope of the appended claims.

## Claims

1. A network transmission device (53) connected to an operating centre (51) and a user device (56), wherein the network transmission device comprises at least one storage unit (54) and the operating centre transmits data to the network transmission device and stores the data in the storage unit.

2. The network transmission device as claimed in claim 1, wherein the operating centre (51) controls the network transmission device (53) and transmits the data stored in the storage unit (54) to the user device (56).

3. The network transmission device as claimed in claim 1 or 2, wherein the storage unit (54) comprises an on-line buffered storage medium (541), an unencrypted off-line storage medium (542) and an encrypted off-line storage medium (543), and the on-line buffered storage medium is a buffered storage site of the data.

4. The network transmission device as claimed in claim 3, wherein the operating centre (51) stores the encrypted data in the encrypted off-line storage medium (543) or encrypts the data stored in the encrypted off-line storage medium.

5. The network transmission device as claimed in claim 3 or 4, wherein the operating centre (51) stores the unencrypted data in the unencrypted off-line storage medium (542), and the user device (56) is capable of controlling the data stored in the unencrypted off-line storage medium.

6. The network transmission device as claimed in any one of the preceding claims, wherein the operating centre (51) comprises an index of the data stored in the storage unit (54).

7. The network transmission device as claimed in claim 1, wherein the operating centre (51) encrypts the data and transmits the encrypted data to the network transmission device (53), and the operating centre further stores the data in the storage unit (54) and decrypts the data stored in the storage unit and transmits the decrypted data to the user device (56).

8. The network transmission device as claimed in claim 1 or 2, wherein the storage unit (54) comprises a plurality of data storage units (63) and provides the data storage units with respective encryption keys (64), while the operating centre (51) is provided with corresponding decryption keys (65).

9. The network transmission device as claimed in any one of the preceding claimss, wherein the network transmission device (53) transmits a transmission log to the operating centre (51) that performs a dynamic monitoring operation when the network transmission device transmits the data stored in the storage unit.

10. The network transmission device as claimed in any one of the preceding claims1, wherein the user device (56) issues a request messge to the operating centre (51) by way of the network transmission device (53) and then the operating centre controls the network transmission device to transmit the data stored in the storage unit to the user device.

11. The network transmission device as claimed in any one of the preceding claims, wherein the user device (56) is a modem, a router or a set-top-box.

12. A network transmission system, comprising:
an operating centre (51);
a network transmission device (53) comprising a storage unit (54) and being connected the operating centre, wherein the operating centre transmits data to the network transmission device and stores the data in the storage unit; and
a user device (56) connected to the network transmission device to receive the data from the network transmission device.

13. The network transmission system as claimed in claim 12, wherein the operating centre (51) controls the network transmission device (53) and transmits the data stored in the storage unit (54) to the user device (56).

14. The network transmission system as claimed in claim 12 or 13, wherein the storage unit (54) comprises a plurality of data storage units (63) and provides the data storage units with respective encryption keys (64), while the operating centre (51) is provided with corresponding decryption keys (65).

15. The network transmission system as claimed in claim 12, 13 or 14, wherein the user device (56) issues a request messge to the operating centre (51) by way of the network transmission device (53) and then the operating centre controls the network transmission device to transmit the data stored in the storage unit to the user device.
